(19) **Europäisches Patentamt**
**European Patent Office**
**Office européen des brevets**

(11) **EP 2 765 024 B1**

(12) **EUROPEAN PATENT SPECIFICATION**

(45) Date of publication and mention
of the grant of the patent:
**07.04.2021 Bulletin 2021/14**

(21) Application number: **12838656.2**

(22) Date of filing: **10.09.2012**

(51) Int Cl.:
*B60L 15/20* (2006.01)    *B60L 3/10* (2006.01)
*B62K 5/027* (2013.01)    *B62D 9/02* (2006.01)
*B62K 5/10* (2013.01)    *B60L 50/51* (2019.01)
*B60L 50/60* (2019.01)

(86) International application number:
**PCT/JP2012/005714**

(87) International publication number:
**WO 2013/051194 (11.04.2013 Gazette 2013/15)**

(54) **ELECTRIC VEHICLE**

ELEKTROFAHRZEUG

VÉHICULE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.10.2011 JP 2011222266**

(43) Date of publication of application:
**13.08.2014 Bulletin 2014/33**

(73) Proprietor: **Yamaha Hatsudoki Kabushiki Kaisha
Iwata-shi, Shizuoka 438-8501 (JP)**

(72) Inventors:
• **HARA, Nobuo
Iwata-shi
Shizuoka 438-8501 (JP)**

• **SHIBUYA, Yuu
Iwata-shi
Shizuoka 438-8501 (JP)**

(74) Representative: **Grünecker Patent- und
Rechtsanwälte
PartG mbB
Leopoldstraße 4
80802 München (DE)**

(56) References cited:
**EP-A1- 1 944 228    EP-A2- 1 875 888
WO-A1-2010/113439    WO-A1-2010/113439
WO-A1-2010/116644    JP-A- 2007 062 682
JP-A- 2011 046 273    US-A1- 2011 006 498**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 2 765 024 B1

**Description**

Technical Field

This invention relates to an electric vehicle having a pair of right and left drive wheels, and capable of making a turn while leaning a vehicle body.

Background Art

Conventionally, this type of vehicle includes an electric vehicle having a non-drive wheel and a pair of right and left drive wheels, and capable of making turns while leaning a vehicle body (see Patent Document 1, for example).

Technique in Patent Document 1

The vehicle in Patent Document 1 includes a non-drive wheel, a steering device, a pair of right and left drive wheels, electric motors for applying driving forces to the respective drive wheels, a link mechanism capable of leaning the vehicle body, and a leaning actuator device for operating this link mechanism.
This vehicle calculates an appropriate lean angle of the vehicle based on a signal from the steering device, and drives the actuator device to attain the calculated lean angle. This operates the link mechanism to stabilize the lean angle of the vehicle body, thereby to improve turning performance.

[Prior Art Document]

[Patent Document]

[Patent Document 1]

Unexamined Patent Publication No. 2011-46273

Summary of Invention

Technical Problem

However, the conventional example with such a construction has the following problem.
The vehicle described in Patent Document 1 has the actuator device dedicated to leaning of the vehicle body, which brings about inconveniences that the vehicle becomes large and heavy, and the construction of the vehicle becomes complicated.
Other examples of relevant prior art are given by patent publications WO 2010/113439 (2010-10-07) and EP 1875888 A2 (2008-01-09).
This invention has been made having regard to the state of the art noted above, and its object is to provide an electric vehicle with a simplified construction and yet capable of stabilizing lean angles of a vehicle body.

Solution to Problem

To fulfill the above object, the invention as defined in claim 1 is provided. Additional embodiments are provided in the dependent claims.
This invention provides an electric vehicle capable of making a turn while leaning a vehicle body, comprising a non-drive wheel rotatable with steering operation, a pair of right and left drive wheels provided separately from the non-drive wheel, a support mechanism for supporting the pair of drive wheels to be vertically movable, a pair of motors corresponding to the pair of drive wheels, respectively, and a controller for varying a difference between motor currents led to the pair of motors, respectively.
[Functions and Effects] The electric vehicle according to this invention includes the support mechanism which enables the pair of right and left drive wheels to move up and down. Therefore, a turn can be made while leaning the vehicle body. The pair of motors provided can drive and rotate the respective drive wheels individually. Further, since the controller varies the difference between the motor currents for the respective motors, each wheel can be rotated with appropriate drive torque. Therefore, even when the vehicle body is leaned, variations in the position of the vehicle body can be inhibited conveniently. More particularly, if the pair of right and left drive wheels are driven with the same motor current, the lean angle can easily be increased and decreased by minute variations of the rider's position or handle operation. According to this invention, on the other hand, a force acts in one leaning direction of the vehicle body by increasing one of the motor currents, which inhibits increase and decrease of the lean angle of the vehicle body. That is, the lean angle of the vehicle body can be stabilized without providing an actuator or the like specially for the purpose.

In the invention described above, it is preferred that the controller makes the motor current led to one of the motors corresponding to a drive wheel in a leaning direction of the vehicle body larger than the motor current led to the other motor. The drive wheels have, occurring thereto, drive torque corresponding to the motor currents. Therefore, this construction can apply greater torque to a drive wheel in the leaning direction. Consequently, one in the leaning direction of the drive wheels transmits a larger driving force to the traveling surface than the other drive wheel, and tends to move ahead of the other wheel. As a result, a force is generated in a direction to raise the vehicle body, which renders the vehicle body easy to rise and difficult to fall in the leaning direction. Therefore, the rider can easily stabilize the leaning angle of the vehicle body. Thus, even when the vehicle body is leaning, the lean angle of the vehicle body can be stabilized conveniently.

The "drive wheel in the leaning direction of the vehicle body" refers to the right drive wheel when the vehicle body leans to the right, and refers to the left drive wheel when the vehicle body leans to the left. When making a turn, the wheel closer to the center of turning corresponds to the "drive wheel in the leaning direction of the vehicle body". However, the "drive wheel in the leaning direction of the vehicle body" is not limited to the case where the electric vehicle is traveling. That is, when the electric vehicle stands still but the vehicle body leans, one of the drive wheels is the "drive wheel in the leaning direction of the vehicle body".

In the invention described above, it is preferred that a pair of drive wheel speed acquiring units are provided for acquiring wheel speeds of the drive wheels, wherein the controller compares results of the drive wheel speed acquiring units, and regards a drive wheel having the slower wheel speed of the pair of drive wheels as the drive wheel in the leaning direction of the vehicle body. This can accurately determine the leaning direction of the vehicle body.

In the invention described above, it is preferred that a direction acquiring unit is provided for acquiring information relating to the leaning direction of the vehicle body, wherein the controller determines the leaning direction of the vehicle body based on a result of the direction acquiring unit. This can accurately determine the leaning direction of the vehicle body.

In the invention described above, it is preferred that the direction acquiring unit includes a steering angle acquiring unit for acquiring a steering angle of a handlebar connected to the non-drive wheel, and the controller determines the leaning direction of the vehicle body based on a result of the steering angle acquiring unit. From the steering angle of the handlebar, the leaning direction of the vehicle body can be determined accurately.

In the invention described above, it is preferred that a non-drive wheel speed acquiring unit is provided for acquiring a wheel speed of the non-drive wheel, wherein the controller obtains a ratio between the motor currents led to the drive wheels, respectively, based on results of the steering angle acquiring unit and the non-drive wheel speed acquiring unit, and adjusts each motor current based on this ratio. A position of the vehicle body can be estimated conveniently from the steering angle of the handlebar and the wheel speed of the non-drive wheel. Therefore, based on the steering angle of the handlebar and the wheel speed of the non-drive wheel, an appropriate ratio between the motor currents can be obtained to apply appropriate drive torque to each drive wheel.

In the invention described above, it is preferred that the controller makes the motor current led to one of the motors corresponding to a drive wheel having the slower wheel speed of the pair of drive wheels larger than the motor current led to the other motor. This can make the drive wheel having a relatively low wheel speed generate relatively large drive torque, and the drive wheel having a relatively high wheel speed generate relatively small drive torque. Therefore, while inhibiting each drive wheel from skidding relative to the traveling surface, the pair of drive wheels as a whole can transmit driving forces effectively to the traveling surface.

In the invention described above, it is preferred that a pair of drive wheel speed acquiring units are provided for acquiring wheel speeds of the drive wheels; wherein the controller adjusts the respective motor currents based on results of the drive wheel speed acquiring units so that a product of the motor current led to one of the motors and the wheel speed of the drive wheel corresponding to the one of the motors be equal to a product of the motor current led to the other motor and the wheel speed of the drive wheel corresponding to the other motor. According to this construction, the product of the wheel speed and the drive torque of one drive wheel is substantially equal to the product of the wheel speed and the drive torque of the other drive wheel. In other words, the respective drive wheels can be made to do substantially equal work.

In the invention described above, it is preferred that a pair of drive wheel speed acquiring units for acquiring wheel speeds of the drive wheels; wherein the controller calculates an average wheel speed of the drive wheels based on results of the drive wheel speed acquiring units, and when one of the drive wheels is slower by at least a fixed value than the average wheel speed, makes the motor current led to one of the motors corresponding to the slower drive wheel larger than the motor current led to the other motor. This construction, when the wheel speed of one of the drive wheels is lower by at least a fixed value than the average wheel speed, makes the one drive wheel generate a relatively large drive torque. Therefore, the one drive wheel can transmit a driving force effectively to the traveling surface. The other drive wheel having a relatively high wheel speed is made to generate a relatively small drive torque. Therefore, the other drive wheel is inhibited conveniently from skidding relative to the traveling surface.

In the invention described above, it is preferred that a pair of drive wheel speed acquiring units are provided for acquiring wheel speeds of the drive wheels, and a non-drive wheel speed acquiring unit is provided for acquiring a wheel speed of the non-drive wheel; wherein the controller, when one of the drive wheels is slower by at least a fixed value than the wheel speed of the non-drive wheel based on the results of the drive wheel speed acquiring units and the non-drive wheel speed acquiring unit, makes the motor current led to one of the motors corresponding to the slower drive wheel larger than the motor current led to the other motor. According to this construction, while each drive wheel is inhibited from skidding relative to the traveling surface, the pair of drive wheels as a whole can transmit driving forces effectively to the traveling surface.

In the invention described above, it is preferred that a non-drive wheel speed acquiring unit is provided for acquiring a wheel speed of the non-drive wheel; wherein the controller sets a maximum voltage of voltages applied to the motors based on a result of the non-drive wheel speed acquiring unit, and adjusts each of the motor currents by varying of the voltages applied within a range up to the maximum voltage. According to this construction, even when the drive wheels skid, the wheel speeds of the drive wheels can be inhibited from increasing sharply.

In the invention described above, it is preferred that the controller varies the voltages applied by varying a duty ratio of voltage pulses applied to the motors, and sets an upper limit of the duty ratio based on the result of the non-drive wheel speed acquiring unit, the upper limit specifying the maximum voltage of the voltages applied. This construction can conveniently vary the voltages applied. Further, the maximum voltage can be set conveniently.

In the invention described above, it is preferred that an accelerator control amount acquiring unit is provided for acquiring an accelerator control amount; wherein the controller obtains a total value of the motor currents based on the accelerator control amount acquiring unit, and adjusts a sum of the motor currents led to the motors to the total value. This construction can apply, to the pair of drive wheels, a drive torque corresponding to the accelerator control amount.

This specification discloses also an invention relating to the following electric vehicle and motor control method:

(1) The electric vehicle described above, comprising a lean angle acquiring unit for acquiring information relating to a lean angle of the vehicle body; wherein the controller determines a leaning direction of the vehicle body based on a result of the lean angle acquiring unit, obtains a ratio between the motor currents led to the drive wheels, and adjusts each motor current based on this ratio.

The electric vehicle according to (1) above can determine a drive wheel in the leaning direction of the vehicle body accurately. Further, an appropriate ratio between the motor currents can be obtained.

(2) The electric vehicle described above, wherein the lean angle acquiring unit includes a rocking angle acquiring unit for acquiring a rocking angle of the support mechanism; wherein the controller estimates a leaning direction of the vehicle body based on a result of the rocking angle acquiring unit.

(3) The electric vehicle described above, wherein the controller estimates a lean angle of the vehicle body based on the result of the rocking angle acquiring unit.

The electric vehicle according to (2) or (3) above can determine a drive wheel in the leaning direction of the vehicle body properly. Further, an appropriate ratio between the motor currents can be obtained.

(4) The electric vehicle described above, comprising a pair of drive wheel speed acquiring units for acquiring wheel speeds of the drive wheels; wherein the controller adjusts the respective motor currents based on results of the drive wheel speed acquiring units so that a ratio between the motor current led to one of the motors and the motor current led to the other motor be a reciprocal of a ratio between the wheel speed of the drive wheel corresponding to the one of the motors and the wheel speed of the drive wheel corresponding to the other motor.

With the electric vehicle according to (4) above, the respective drive wheels can be made to do substantially equal work.

(5) A motor control method for an electric vehicle capable of making a turn while leaning a vehicle body and having a pair of right and left drive wheels provided separately from a non-drive wheel, a support mechanism for supporting each of the drive wheels to be vertically movable, and a pair of motors for individually rotating the drive wheels, the method comprising making a motor current led to one of the motors corresponding to a drive wheel acting as inner wheel larger than a motor current led to the other motor when the vehicle body leans.

(6) The motor control method described above, comprising comparing wheel speeds of the drive wheels, and regarding a drive wheel having the slower wheel speed of the pair of drive wheels as inner wheel.

(7) The motor control method described above, comprising determining a leaning direction of the vehicle body based on a steering angle of a handlebar connected to the non-drive wheel.

(8) The motor control method described above, comprising estimating a lean angle of the vehicle body from a wheel speed of the non-drive wheel and the steering angle of the handlebar, obtaining a ratio between the motor currents led to the drive wheels based on the lean angle estimated, and adjusting each motor current based on the ratio obtained.

(9) A motor control method for an electric vehicle capable of making a turn while leaning a vehicle body and having a pair of right and left drive wheels provided separately from a non-drive wheel, a support mechanism for supporting each of the drive wheels to be vertically movable, and a pair of motors for individually rotating the drive wheels, the method comprising making a motor current led to one of the motors corresponding to a drive wheel having a relatively slow wheel speed larger than a motor current led to the other motor when wheel speeds are different between the pair of drive wheels.

(10) The motor control method described above, comprising adjusting the respective motor currents so that a product of the motor current led to one of the motors and the wheel speed of the drive wheel corresponding to the one of the motors be equal to a product of the motor current led to the other motor and the wheel speed of the drive wheel corresponding to the other motor.

(11) The motor control method described above, comprising calculating an average wheel speed of the drive wheels, and when one of the drive wheels is slower by at least a fixed value than the average wheel speed, making the motor current led to the motor corresponding to the slower drive wheel larger than the motor current led to the other motor.

(12) The motor control method described above, comprising, when one of the drive wheels is slower by at least a fixed value than the wheel speed of the non-drive wheel, making the motor current led to the motor corresponding to the slower drive wheel larger than the motor current led to the other motor.

(13) The motor control method described above, comprising setting a maximum voltage of voltages applied to the motors based on the wheel speed of the non-drive wheel, and adjusting the motor currents by varying of the voltages applied within a range up to the maximum voltage.

(14) The motor control method described above, comprising varying the voltages applied by varying a duty ratio of voltage pulses applied to the motors, and setting an upper limit of the duty ratio based on the result of the wheel speed of the non-drive wheel, the upper limit specifying the maximum voltage of the voltages applied.

(15) The motor control method described above, wherein an accelerator control amount acquiring unit is provided for acquiring an accelerator control amount; the method comprising obtaining a total value of the motor currents based on the accelerator control amount, and adjusting a sum of the motor currents led to the motors to the total value.

The motor control method according to (5) to (15) above can stabilize a lean angle of the vehicle body with a simplified construction, as in the invention relating to the electric vehicle described above.

Advantageous Effects of Invention

An electric vehicle according to this invention includes a support mechanism which enables a pair of right and left drive wheels to move up and down. Therefore, when a turn is made while leaning the vehicle body, each of the drive wheels can remain in contact with the traveling surface. A pair of motors provided can drive and rotate the respective drive wheels individually. Further, since a controller varies a difference between motor currents for the respective motors, each wheel can be rotated with appropriate drive torque. Therefore, even when the vehicle body leans, variations in the position of the vehicle body can be inhibited conveniently. That is, the lean angle of the vehicle body can be stabilized with a simplified construction.

Brief Description of Drawings

Figure 1 is a left side view of an electric vehicle according to Embodiment 1;
Figure 2 is a left side view showing a principal portion of the electric vehicle according to Embodiment 1;
Figure 3 is a rear view of the electric vehicle according to Embodiment 1;
Figure 4 is a section taken on line a-a of Figure 2, in which Figure 4 (a) shows a seesaw member in neutral position, and Figure 4 (b) shows the seesaw member not in neutral position;
Figure 5 is a perspective view of the principal portion of the electric vehicle seen from a rear left side;
Figure 6 is a perspective view of the principal portion of the electric vehicle seen from the rear left side;
Figure 7 is a rear view of the electric vehicle with a vehicle body leaning to the right;
Figure 8 is a block diagram showing an outline construction of a control system;
Figure 9 is a flow chart showing an operating sequence of drive control of electric motors;
Figure 10 is a block diagram showing an outline construction of a control system of an electric vehicle according to Embodiment 2;
Figure 11 is a view showing an example of ratio map;

Figure 12 is a block diagram showing an outline construction of a control system of an electric vehicle according to a modified embodiment; and

Figure 13 is a block diagram showing an outline construction of a control system of an electric vehicle according to a modified embodiment.

Embodiment 1

An electric vehicle of this invention will be described hereinafter with reference to the drawings.

1. Outline construction of electric vehicle

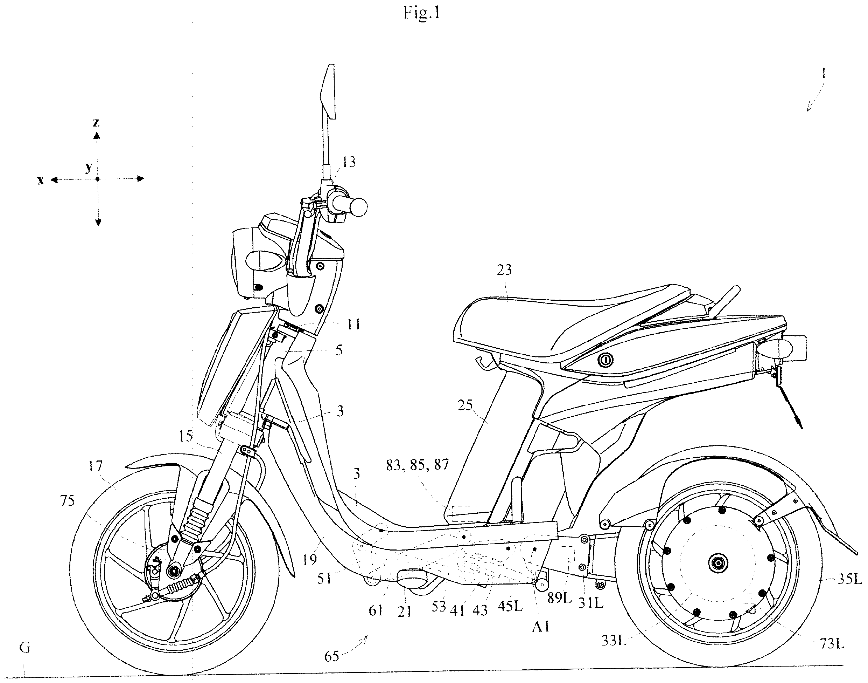

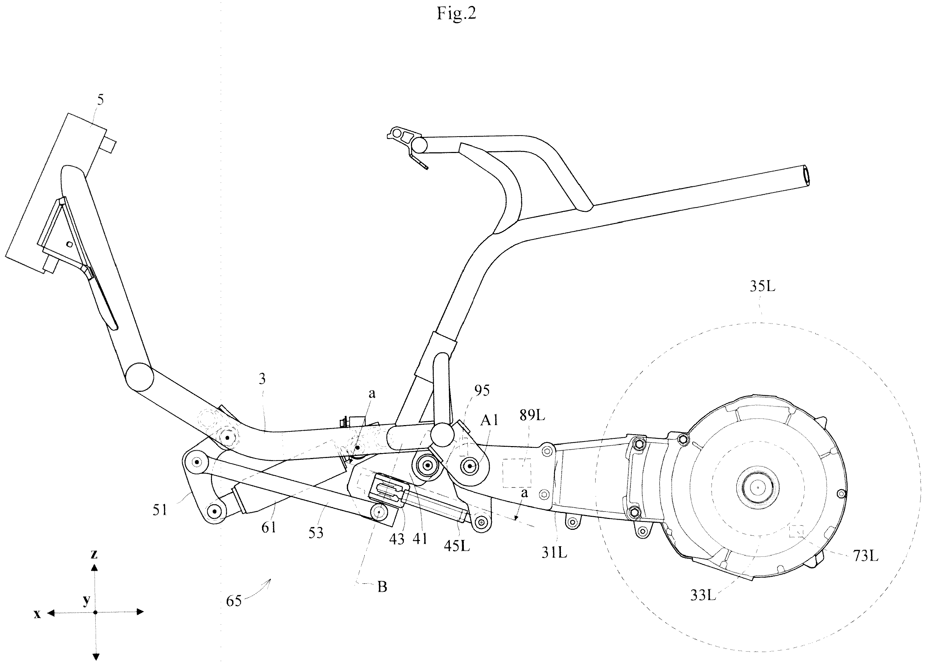

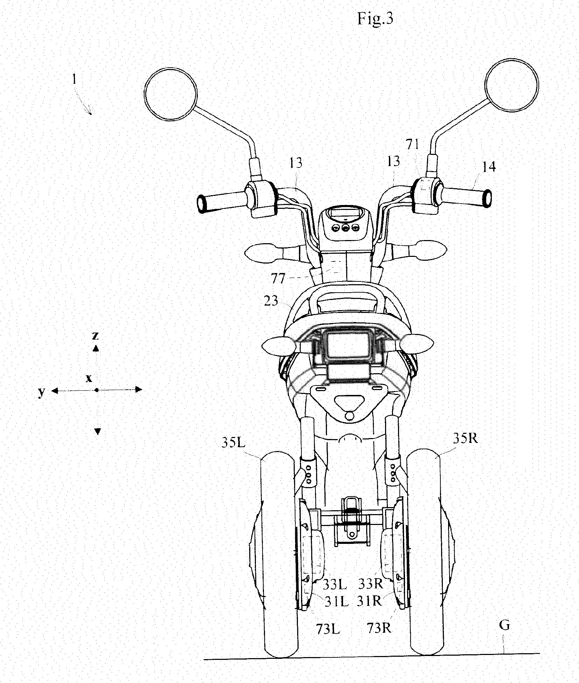

Fig. 1 is a left side view of an electric vehicle according to Embodiment 1. Fig. 2 is a left side view showing a principal portion of the electric vehicle according to Embodiment 1. Fig. 3 is a rear view of the electric vehicle according to Embodiment 1.

In each figure, x-direction is the longitudinal direction of a vehicle body, y-direction the transverse direction of the vehicle body, and z-direction the up-and-down direction of the vehicle body. The longitudinal direction x, transverse direction y and up-and-down direction z of the vehicle body are at right angles to one another. When the vehicle body stands upright on a horizontal traveling surface G, the longitudinal direction x and transverse direction y of the vehicle body are horizontal, respectively, and the up-and-down direction z of the vehicle body is vertical. In Fig. 1, the left side of the drawing is the front of the electric vehicle 1, and the right side of the drawing is the rear of the electric vehicle 1. A simple indication herein of right and left refers to "right" and "left" as seen from the rider on the electric vehicle 1.

Reference is made to Figs. 1 to 3. The electric vehicle 1 in this embodiment is a scooter type three-wheeled vehicle. The electric vehicle 1 has a body frame 3. A head tube 5 is disposed at the front end of the body frame 3. The head tube 5 has a steering shaft 11 rotatably inserted therein. A handlebar 13 is attached to an upper end of the steering shaft 11. The handlebar 13 has an accelerator grip 14 attached thereto to be gripped and operated by the rider (see Fig. 3). A front fork 15 is attached to a lower end of the steering shaft 11. A single front wheel 17 is rotatably supported by the lower end of the front fork 15. The front wheel 17 is rotatable with steering operation. The front wheel 17 corresponds to the non-drive wheel in this invention.

A front cover 19 is attached to the body frame 3. In this specification, the term "vehicle body" is used as appropriate to indicate the body frame 3 including also the front cover 19 and other components integrally fixed to the body frame 3.

The body frame 3 has, attached thereto, a pair of right and left pedals 21 for supporting the rider's feet, and a seat 23 for the rider to sit on. Below the seat 23, the body frame 3 supports a battery 25 which can accumulate electric power.

2. Construction relating to rear arms, motors and rear wheels

Reference is made to Figs. 1 and 2. The body frame 3 supports a right rear arm 31R (see Fig. 3) and a left rear arm 31L. The right rear arm 31R and left rear arm 31L are rockable about a rocking central axis A1. The rocking central axis A1 is parallel to the transverse direction y. In this specification, an angle through which the right rear arm 31R rocks about the rocking central axis A1 relative to the vehicle body is called "right rocking angle". Similarly, an angle through which the left rear arm 31L rocks about the rocking central axis A1 relative to the vehicle body is called "left rocking angle". An arbitrary position can be selected as reference for these right rocking angle and left rocking angle. For example, the position of each rear arm 31R or 31L relative to the vehicle body standing upright may be selected as reference (zero degree). In the following description, the simple term "rocking angle" is used when the right rocking angle and the left rocking angle are not distinguished.

Each of the right rear arm 31R and left rear arm 31L is disposed to extend rearward from the rocking central axis A1. As shown in Fig. 3, a right electric motor 33R is mounted in a rear end portion of the right rear arm 31R. The right electric motor 33R is electrically connected to the battery 25 to receive supply of electric power from the battery 25. The right electric motor 33R is connected to a right rear wheel 35R to be able to rotate the right rear wheel 35R. Similarly, as shown in Figs. 1 to 3, a left electric motor 33L is mounted in a rear end portion of the left rear arm 31L. The left electric motor 33L is connected to a left rear wheel 35L to be able to rotate the left rear wheel 35L.

As shown in Fig. 3, the right rear wheel 35R and left rear wheel 35L are arranged at the right side and the left side of the vehicle body, respectively, with the vehicle body located in between. When the right rear arm 31R rocks about the rocking central axis A1, the right rear wheel 35R will move substantially in the up-and-down direction z relative to the vehicle body. That is, the right rear arm 31R supports the right rear wheel 35R to be movable up and down. Similarly, the left rear arm 31L supports the left rear wheel 35L to be movable up and down.

When each electric motor 33R or 33L rotates individually each rear wheel 35R or 35L, the electric vehicle 1 will move forward. The right rear wheel 35R and left rear wheel 35L correspond to the drive wheels in this invention. The right electric motor 33R and left electric motor 33L correspond to the motors in this invention.

3. Construction relating to lever, seesaw member, bracket, and buffer

As shown in Figs. 1 and 2, the body frame 3 further supports a lever 41, a bracket 51 and a buffer 61.

The lever 41 is rockable about an axis parallel to the transverse direction y relative to the vehicle body. The lever 41 supports a seesaw member 43. With rocking of the lever 41, the seesaw member 43 moves substantially in the longitudinal direction x. The seesaw member 43 is rotatable about an axis of rotation B relative to the lever 41. The axis of rotation B passes through the center of the seesaw member 43 and extends substantially perpendicular to the transverse direction y.

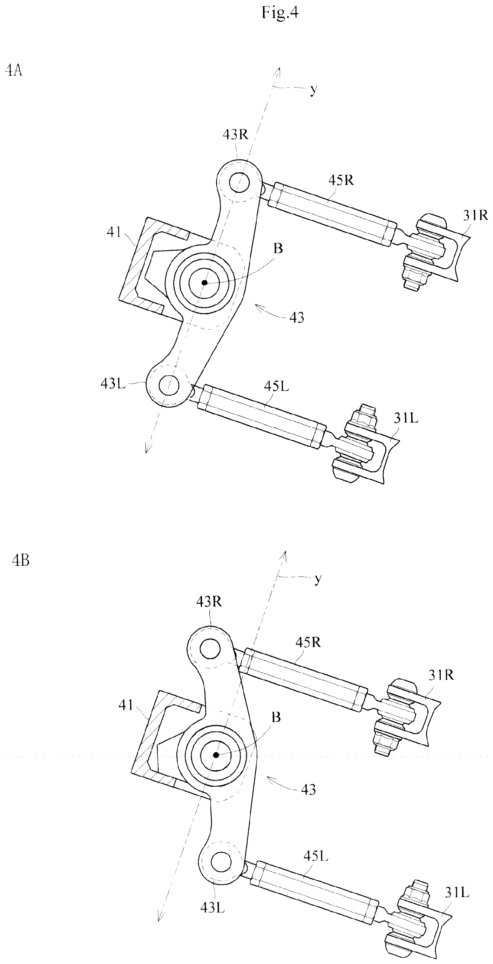

Reference is made to Fig. 4. Fig. 4 is a section taken on line a-a of Fig. 2, in which Fig. 4 (a) shows the seesaw member 43 in neutral position, and Fig. 4 (b) shows the seesaw member 43 not in neutral position;

As shown in Fig. 4, the seesaw member 43 assumes a shape extending to opposite sides in the transverse direction y from the axis of rotation B. The seesaw member 43 has a right end 43R and a left end 43L thereof interlocked by two rods 45R and 45L to the right rear arm 31R and left rear arm 31L, respectively.

As shown in Fig. 4 (a), when the seesaw member 43 is in neutral position, the rocking angle of the right rear arm 31R and the rocking angle of the left rear arm 31L are the same. In this case, a height position relative to the vehicle body of the right rear wheel 35R and a height position relative to the vehicle body of the left rear wheel 35L are the same, and the vehicle body stands upright.

As shown in Fig. 4 (b), when the seesaw member 43 rotates about the axis B, the rod 45R will move substantially forward and the rod 45L backward. The right rear arm 31R will rock downward and the left rear arm 31L upward. In this case, the right rear wheel 35R will move substantially downward according to the right rocking angle of the right rear arm 31R, On the other hand, the left rear wheel 35L will move substantially upward according to the left rocking angle of the left rear arm 31L.

Reference is made to Figs. 1 and 2. The bracket 51 is rockably supported by the body frame 3. The bracket 51 is interlocked to the lever 41 by a rod 53. When the bracket 51 rocks, the lever 41 will rock therewith.

The buffer 61 has a rear end thereof interlocked to the body frame 3. The front end of the buffer 61 is supported by the bracket 51. When the bracket 51 rocks, the buffer 61 will extend and contract.

And when the right or left rear arm 31R or 31L receives a shock, the seesaw member 43 will move, the lever 41 and bracket 51 will rock, respectively, and the buffer 61 will expand and contract. Thus, with the respective members interlocked, the buffer 61 can be contracted to absorb a shock conveniently.

4. Regarding operation of support mechanism accompanying leaning of vehicle body

The right rear arm 31R, left rear arm 31L, lever 41, seesaw member 43, rods 45R and 45L, bracket 51, rod 53 and buffer 61 described above constitute a support mechanism 65. Operation of this support mechanism 65 will be described hereinafter.

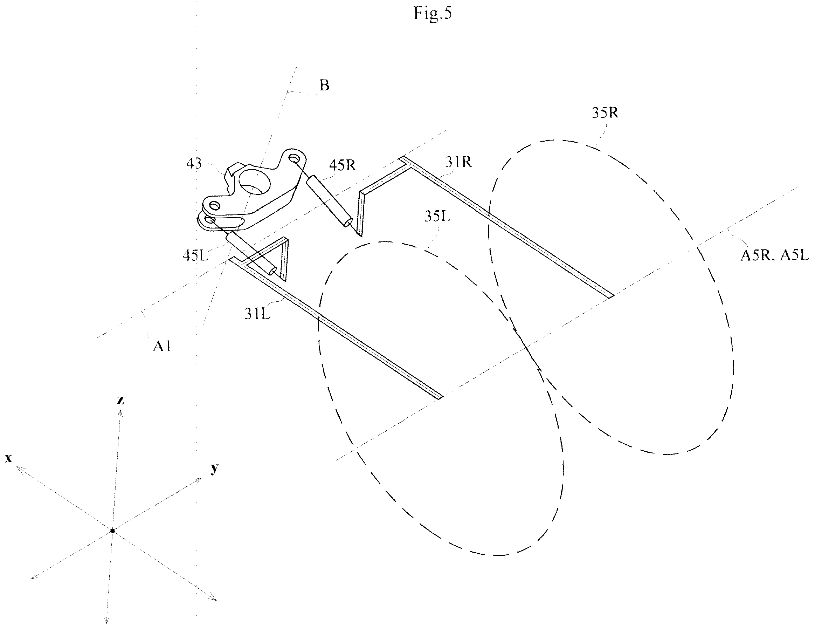

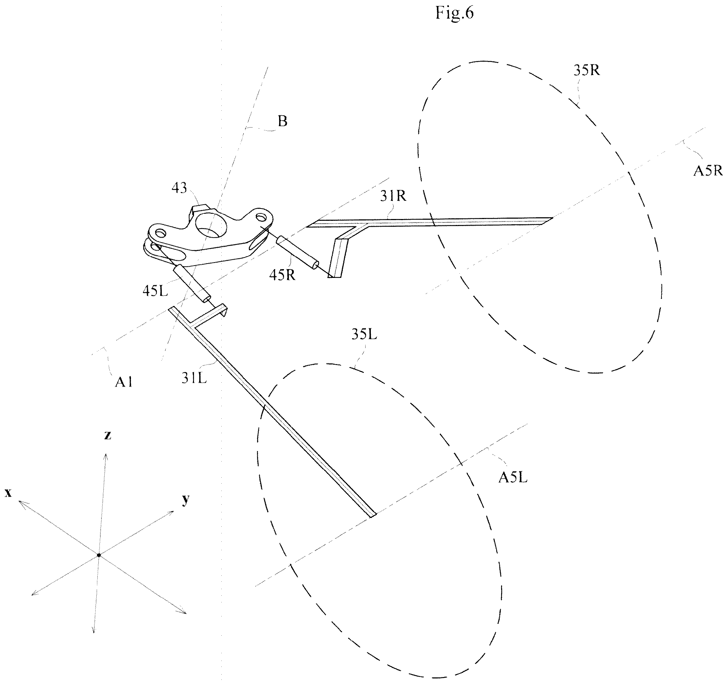

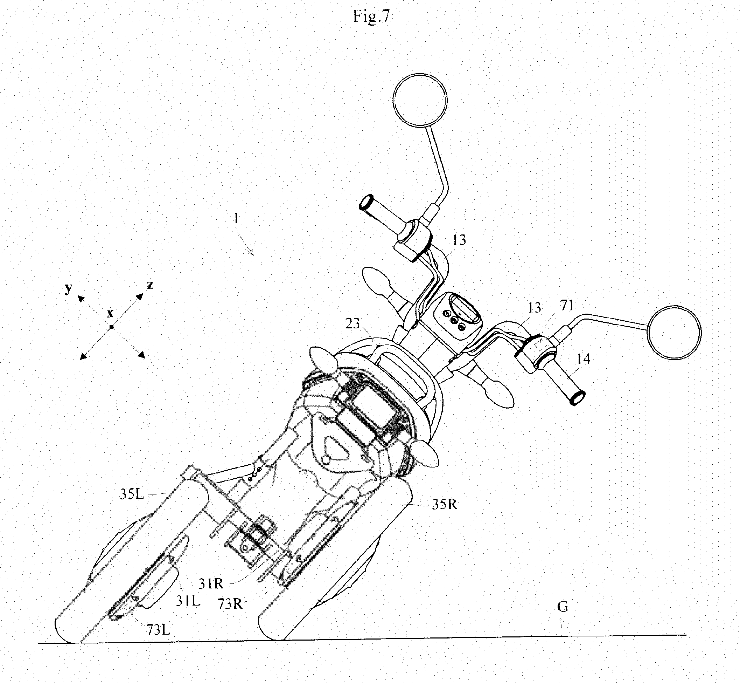

Reference is made to Figs. 5 to 7. Figs. 5 and 6 are perspective views of the principal portion seen from a rear left side of the electric vehicle, respectively. Fig. 5 shows a state in which the vehicle body stands upright, and Fig. 6 shows a state in which the vehicle body leans to the right. Figs. 5 and 6 schematically show the right and left rear arms 31R and 31L and the rods 45R and 45L. Fig. 7 is a rear view of the electric vehicle corresponding to Fig. 6 and shows the vehicle body leaning to the right. Fig. 3 is a rear view of the electric vehicle corresponding to Fig. 5.

When, for example, the vehicle body stands upright as shown in Figs. 3 and 5, the rear wheels 35R and 35L are in the same height position relative to the vehicle body. In this case, the seesaw member 43 is in neutral position. Fig. 5 shows an axle A5R of the right rear wheel 35R and an axle A5L of the left rear wheel 35L (and so does Fig. 6).

Now, when the vehicle body leans to the right, as shown in Figs. 6 and 7, the right wheel 35R will move upward relative to the vehicle body. The right rear arm 31R rocks upward about the rocking central axis A1. The rod 45R moves substantially backward, the seesaw member 43 rotates about the axis of rotation B, and the rod 45L moves forward. The left rear arm 31L rocks downward, and the left rear wheel 35L moves substantially downward relative to the vehicle body. The amount of downward movement of the left rear wheel 35L is substantially equivalent to the amount of upward movement of the right rear wheel 35R.

When the vehicle body leans to the left, the moving direction, rocking direction or rotating direction of each member constituting the support mechanism 65 is reversed.

5. Detectors

The electric vehicle 1 includes an accelerator control amount acquiring unit 71, a right rear wheel speed acquiring unit 73R, a left rear wheel speed acquiring unit 73L and a front wheel speed acquiring unit 75.

Reference is made to Fig. 3. The accelerator control amount acquiring unit 71 is mounted on the handlebar 13 for detecting control amounts of the accelerator grip 14 by the rider. The accelerator control amount acquiring unit 71 is formed of a magnetic sensor, potentiometer or rotary encoder.

The right rear wheel speed acquiring unit 73R detects wheel speed SR of the right rear wheel 35R. The left rear wheel speed acquiring unit 73L detects wheel speed SL of the left rear wheel 35L. These speed acquiring units 73R and 73L are formed of rotary encoders or the like. Each rear wheel speed acquiring unit 73R or 73L may directly detect the wheel speed SR or SL of each rear wheel 35R or 35L, or may indirectly detect the wheel speed SR or SL by detecting a rotational frequency of each corresponding electric motor 33R or 33L. The right rear wheel speed acquiring unit 73R and left rear wheel speed acquiring unit 73L correspond to the drive wheel speed acquiring units in this invention.

Reference is made to Fig. 1. The front wheel speed acquiring unit 75 detects wheel speed SF of the front wheel 17. The front wheel speed acquiring unit 75 is also formed of a rotary encoder or the like. The front wheel speed acquiring unit 75 corresponds to the non-drive wheel speed acquiring unit in this invention.

Each of the above acquiring units 71, 73R, 73L and 75 outputs detection results to a controller 81 described hereinafter.

6. Controller

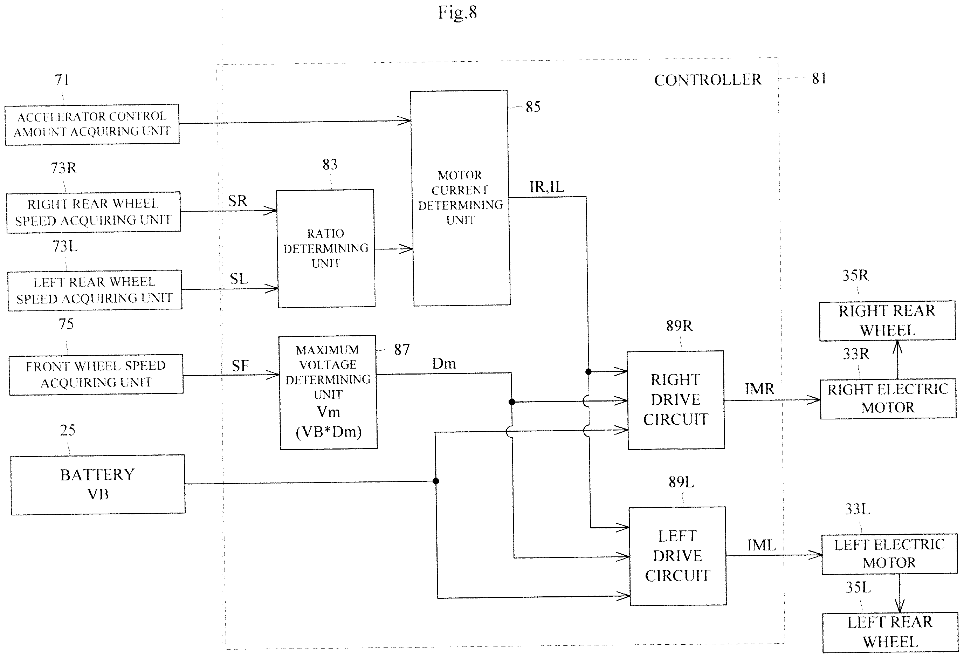

Reference is made to Fig. 8. Fig. 8 is a block diagram showing an outline construction of a control system. The controller 81 includes a ratio determining unit 83, a motor current determining unit 85, a maximum voltage determining unit 87, a right drive circuit 89R and a left drive circuit 89L.

The ratio determining unit 83 determines a ratio between motor currents distributed to the right electric motor 33R and left electric motor 33L based on the detection results (wheel speeds SR and SL) of the respective rear wheel speed acquiring units 73R and 73L. This ratio is synonymous with a ratio between target values IR and IL described hereinafter.

The motor current determining unit 85 obtains a target value of a total (hereinafter called simply "total value") IA of the motor currents fed to the right electric motor 33R and left electric motor 33L based on the detection result of the accelerator control amount acquiring unit 71. Further, based on the obtained total value IA and the ratio determined by the ratio determining unit 83, it determines a target value IR of the motor current applied to the right electric motor 33R and a target value IL of the motor current applied to the left electric motor 33L.

The maximum voltage determining unit 87 obtains an upper limit Dm of a duty ratio based on the detection result (wheel speed SF) of the front wheel speed acquiring unit 75. This upper limit Dm specifies a maximum voltage Vm of voltage applied to each electric motor 33R or 33L.

The right drive circuit 89R is electrically connected between the battery 25 and the right electric motor 33R for carrying out drive control of the right electric motor 33R based on the target value IR and upper limit Dm. The left drive circuit 89L is electrically connected between the battery 25 and the left electric motor 33L for carrying out drive control of the left electric motor 33L based on the target value IL and upper limit Dm.

In the following description, the term "drive circuits 89" is used as appropriate when the right drive circuit 89R and left drive circuit 89L are not distinguished. Similarly, the right electric motor 33R and left electric motor 33L are called "electric motors 33" as appropriate.

The drive control of the drive circuits 89 may be current feedback control, for example. That is, a current detecting circuit (not shown) detects motor currents IMR and IML actually applied to the electric motors 33R and 33L, and the voltages applied to the electric motors 33 are varied so that these motor currents IMR and IML attain the target values IR and IL. Variations of the applied voltages are carried out by PWM (Pulse Width Modulation) control. That is, the applied voltages are varied by varying the duty ratio of voltage pulses. The range of duty ratio variation is up to the upper limit Dm. Here, the voltage value of voltage pulse is substantially equal to a battery voltage VB outputted from the battery 25. Therefore, an applied voltage corresponds to a value of the battery voltage VB multiplied by a duty ratio. The maximum voltage Vm of applied voltages is a product of the battery voltage VB and the upper limit Dm.

As shown in Fig. 1, each determining unit 83, 85 or 87 described above is disposed in a position adjacent the battery 25. As shown in Figs. 1 and 2, the left drive circuit 89L is mounted in the left rear arm 31L. The right drive circuit 89R is likewise mounted in the right rear arm 31R. The controller 81 is realized by a central processing unit (CPU) which performs various processes, and a storage medium, or a microcomputer. The storage medium has, stored therein beforehand, a table matching the accelerator control amount and total value IA, and a table matching the wheel speed SF and upper limit Dm. The table matching the wheel speed SF and upper limit Dm is set by taking the characteristics of the electric motors 33 into consideration. Each drive circuit 89 is constructed to further include an inverter, for example.

7. Motor control operation

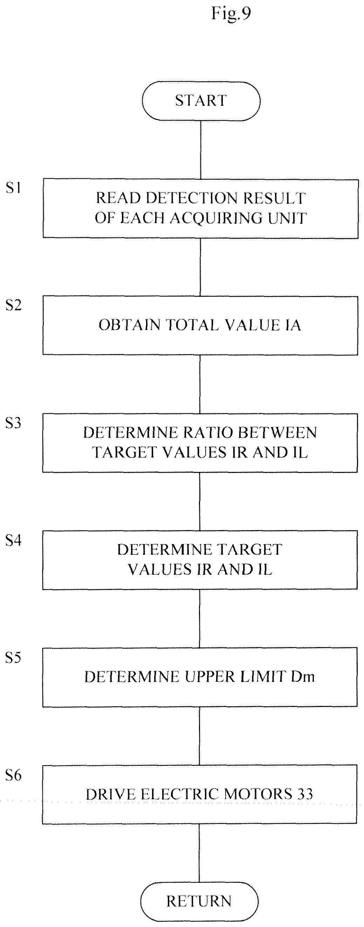

Next, an example of operation of the electric vehicle 1 according to Embodiment 1 will be described. Here description will be made centering particularly on an operation to carry out drive control of the respective electric motors 33R and 33L. Fig. 9 is a flow chart showing an operating sequence.

<Step S1> Read detection result of each acquiring unit

The controller 81 reads the detection result of each of the accelerator control amount acquiring unit 71, right rear wheel speed acquiring unit 73R, left rear wheel speed acquiring unit 73L and front wheel speed acquiring unit 75 at regular time intervals. Information on the accelerator control amount which is the detection result of the accelerator control amount acquiring unit 71 is inputted to the motor current determining unit 85. Information on the wheel speeds SR and SL which are the detection results of the right and left rear wheel speed acquiring units 73R and 73L is inputted to the ratio determining unit 83. Information on the wheel speed SF which is the detection result of the front wheel speed acquiring unit 75 is inputted to the maximum voltage determining unit 87.

<Step S2> Obtain total value IA

The motor current determining unit 85 obtains total value IA of the motor currents corresponding to the accelerator control amount with reference to the table stored in the storage medium.

<Step S3> Determine ratio between target values IR and IL

The ratio determining unit 83 determines a ratio between the target values IR and IL based on the wheel speeds SR and SL.
In this Embodiment 1, the ratio between the target values IR and IL is determined so that the ratio between the target values IR and IL be the reciprocal of the ratio between the wheel speeds SR and SL. This ratio is represented by the following relational expression (1). The ratio can be represented using an appropriate form of expression.

$$IR/IL = SL/SR \qquad ... (1)$$

In this case, ratios RR and RL of the target values IR and IL to the total of the target values IR and IL are expressed as in the following equations (2) and (3):

$$RR = SL/(SR+SL) \qquad ... (2)$$

$$RL = SR/(SR+SL) \qquad ... (3)$$

<Step S4> Determine target values IR and IL

The motor current determining unit 85 determines the target values IR and IL by substituting the total value IA and the ratio determined by the ratio determining unit 83 into the following equations (4) and (5), for example:

$$IR = IA*RR = IA*(SL/(SR+SL)) \qquad ... (4)$$

$$IL = IA*RL = IA*(SR/(SR+SL)) \qquad ... (5)$$

As is clear from any of the equations (1) through (5), according to the ratios exemplified in this Embodiment 1, the product of target value IR and wheel speed SR and the product of target value IL and wheel speed SL are equal.

<Step S5> Determine upper limit Dm

The maximum voltage determining unit 87 determines upper limit Dm of the duty ratio based on the wheel speed SF, with reference to the table stored in the storage medium.

<Step S6> Drive electric motors 33

The right drive circuit 89R adjusts the motor current IMR to the target value IR by varying the duty ratio in the range not exceeding the upper limit Dm. Similarly, the left drive circuit 89L adjusts the motor current IML to the target value IL by varying the duty ratio in the range not exceeding the upper limit Dm.

The right electric motor 33R rotates the right rear wheel 35R. The right rear wheel 35R has, occurring thereto, a drive torque corresponding to the motor current IMR. Similarly, the left electric motor 33L rotates the left rear wheel 35L. The left rear wheel 35L has, occurring thereto, a drive torque corresponding to the motor current IML.

Here, since the motor current IM and drive torque are substantially in a proportional relation, the product of the wheel speed SR and the drive torque of the right rear wheel 35R is substantially equal to the product of the wheel speed SL and the drive torque of the left rear wheel 35L. That is, the work done by the right rear wheel 35R and the work done by the left rear wheel 35L become substantially equal. The rear wheels 35R and 35L together have, occurring thereto, a drive torque corresponding to the accelerator control amount.

8. Operation of electric vehicle

According to the above drive control of the electric motors 33R and 33L, the electric vehicle 1 can operate as follows according to its traveling state:

8.1 At time of turning

When making a turn while leaning the vehicle body to the right as shown in Fig. 7, for example, the right rear wheel 35R acts as the "drive wheel in the leaning direction of the vehicle body". In the following description, the right rear wheel 35R will be called "inner wheel 35R" as appropriate, and the left rear wheel 35L will be called "outer wheel 35L" as appropriate.

Since the wheel speed SR of the inner wheel 35R is lower than the wheel speed SL of the outer wheel 35L, the target value IR is determined to be a larger value than the target value IL. A larger motor current IMR is applied to the right electric motor 33R corresponding to the inner wheel 35R than the left electric motor 33L. As a result, a relatively large drive torque occurs to the inner wall 35R, and a relatively small drive torque occurs to the outer wheel 35L.

Since the wheel speed SR of the inner wheel 35R is relatively slow, the inner wheel 35R is less likely to skid relative to the traveling surface G than the outer wheel 35L. Therefore, even if a relatively large drive torque is applied to the inner wheel 35R, a driving force can be effectively transmitted to the traveling surface G.

On the other hand, since the wheel speed SL of the outer wheel 35L is relatively fast, the outer wheel 35L skids relative to the traveling surface G more easily than the inner wheel 35R. So, a relatively small drive torque appropriate to the wheel speed SL is given to the outer wheel 35L. Consequently, a driving force can be transmitted appropriately to the traveling surface G while inhibiting the outer wheel 35L from skidding relative to the traveling surface G.

Thus, since the inner wheel 35R transmits a larger driving force to the traveling surface G than the outer wheel 35L, the force for accelerating the inner wheel 35R becomes larger than the force for accelerating the outer wheel 35L. In other words, the inner wheel 35R tends to move ahead of the outer wheel 35L. As a result, a force is generated in a direction to raise the vehicle body. Since the vehicle body becomes easy to rise and difficult to fall in the leaning direction, the rider can easily stabilize the lean angle of the vehicle body.

The pair of rear wheels 35R and 35L as a whole can transmit a driving force effectively to the traveling surface G. In other words, even if the accelerator control amount (total value IA) is the same, the pair of rear wheels 35R and 35L as a whole can transmit a greater driving force to the traveling surface G according to this Embodiment 1. Or it can be said that, when a sum of the driving forces the pair of rear wheels 35R and 35L transmit to the traveling surface G is regarded as "total amount of driving forces", it is possible to improve the total amount of driving forces in relation to the accelerator control amount.

Although the above description has been made on the case where the vehicle body leans to the right, the position of the vehicle body can be stabilized conveniently also when the vehicle body leans to the left. When the vehicle body leans to the left, the left rear wheel 35L acts as the "drive wheel in the leaning direction of the vehicle body".

8.2 When one of the rear wheels 35R and 35L skids at time of turning

When the inner wheel 35R begins to skid relative to the traveling surface G, for example, while making a turn with the vehicle body leaning to the right, the wheel speed SR of the inner wheel 35R will increase and the wheel speed SR will become faster than the wheel speed SL. In such a situation, the target value IR will be determined to have a smaller value than the target value IL. That is, the drive torque given to the inner wheel 35R becomes small, and the drive torque given to the outer wheel 35L becomes large.

When the drive torque of the inner wheel 35R lowers, an increase of the wheel speed SR will be inhibited. Therefore, the grip of the inner wheel 35R is expected to recover early. On the other hand, the outer wheel 35L is made to generate a relatively large drive torque, and the outer wheel 35L begins to transmit a greater driving force to the traveling surface G. Thus, when it becomes difficult for the inner wheel 35R to transmit a driving force to the traveling surface G effectively, the outer wheel 35L will transmit a driving force in a way to compensate for it, whereby the inner wheel 35R and outer wheel 35L as a whole can continue transmitting a driving force to the traveling surface G. This can inhibit variations of the position of the vehicle body, and can recover the grip of the inner wheel 35R early.

Although the above description has been made on the time of the inner wheel 35R beginning to skid relative to the traveling surface G, the same applies also to the time of the outer wheel 35L beginning to skid relative to the traveling surface G. That is, when the outer wheel 35L begins to skid, the drive torque given to the inner wheel 35R is further increased, and the drive torque given to the outer wheel 35L is further decreased. This can inhibit variations of the position of the vehicle body, and can recover the grip of the outer wheel 35L early.

8.3 When both of the rear wheels 35R and 35L skid at time of turning

When both of the inner wheel 35R and outer wheel 35L begin to skid relative to the traveling surface G while making a turn with the vehicle body leaning to the right, the wheel speeds SR and SL will increase, respectively. In this case, the induction voltage of each of the electric motors 33R and 33L rises, and the motor current IMR or IML actually applied to each of the electric motors 33R and 33L will lower. The drive circuits 89R and 89L increase the duty ratio so that the motor currents IMR and IML have target values IR and IL, respectively. However, since the duty ratio is restricted to the range not exceeding the upper limit Dm, when the duty ratio reaches the upper limit Dm, it will not increase any more. That is, however the wheel speeds SR and SL may increase, the voltage applied to the electric motors 33 will not become larger than the maximum voltage Vm. Therefore, the wheel speeds SR and SL are conveniently inhibited from increasing rapidly. Therefore, the grips of the inner wheel 35R and outer wheel 35L can be recovered early.

8.4 At time of straight traveling

When traveling straight with the vehicle body in an upright position, the wheel speeds SR and SL are substantially equal. In this case, the target values IR and IL are determined to have substantially an equal value. As a result, a substantially equivalent drive torque occurs to the right and left rear wheels 35R and 35L.

When one or both of the right and left rear wheels 35R and 35L begin(s) to skid at the time of straight traveling, an operation takes place substantially as in the case of 8.2 and 8.3 described above.

As described above, the electric vehicle 1 according to Embodiment 1 includes the electric motors 33R and 33L for individually driving the rear wheels 35R and 35L, and the controller 81 which changes the difference between the motor currents IMR and IML of these electric motors 33R and 33L. This can conveniently stabilize the lean angle of the vehicle body.

Since the ratio determining unit 83 determines the ratio between the target values IR and IL based on the wheel speeds SR and SL, a greater drive torque can be applied appropriately to the rear wheel 35 acting as the inner wheel than to the rear wheel 35 acting as the outer wheel.

The ratio determining unit 83 determines the ratio between the target values IR and IL so that the product of target value IR and wheel speed SR and the product of target value IL and wheel speed SL become equal. According to this, the larger difference between the wheel speed SR and wheel speed SL results in the larger difference between the target value IR and target value IL. That is, the controller 81 varies the difference between the motor currents IMR and IML in response to the difference between the wheel speeds SR and SL. Therefore, each of the rear wheel 35R and rear wheel 35L can be made to generate appropriate drive torque according to the difference between the wheel speeds SR and SL, respectively.

Embodiment 2

Embodiment 2 of this invention will be described hereinafter with reference to the drawings. An electric vehicle 1 according to Embodiment 2 is different in the constructions of the detectors and the controller from Embodiment 1, and in the other aspects has substantially the same constructions as Embodiment 1. So, the description of common constructions will be omitted where appropriate. Like reference signs are affixed to the same components as in Embodiment 1. Reference will be made, as appropriate, to Fig. 3 showing the electric vehicle 1 according to Embodiment 1.

1. Detectors

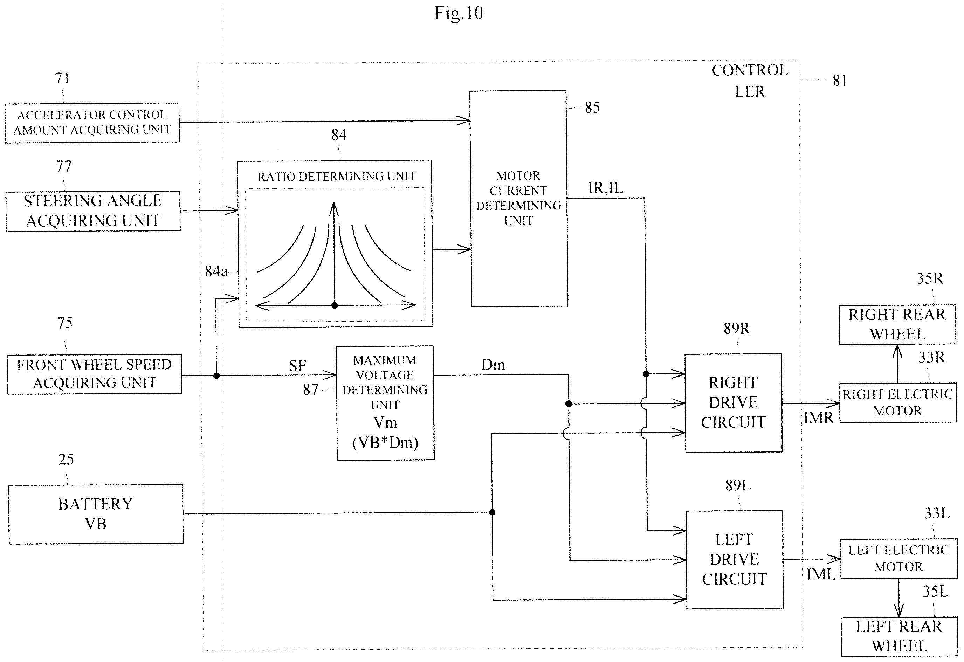

Reference is made to Fig. 10. Fig. 10 is a block diagram showing an outline construction of a control system of the electric vehicle according to Embodiment 2. As shown, the electric vehicle according to Embodiment 2 includes the accelerator control amount acquiring unit 71, the front wheel speed acquiring unit 75, and a steering angle acquiring unit 77.

Reference is made to Fig. 3. The steering angle acquiring unit 77 acquires steering angles of the handlebar 13 steered by the rider. The steering angle acquiring unit 77 outputs information on the steering angles which are its detection results to the controller 81. The information on the steering angles is information enabling determination of whether the handlebar 13 is turned right or left, along with angles through which the handlebar 13 is turned. The steering angle acquiring unit 77 is formed of an angle sensor, magnetic sensor, potentiometer or encoder.

2. Controller

The controller 81 includes a ratio determining unit 84, the motor current determining unit 85, the maximum voltage determining unit 87, the right drive circuit 89R and the left drive circuit 89L. The components other than the ratio determining unit 84 are substantially the same as in Embodiment 1.

The ratio determining unit 84 determines a ratio between target values IR and IL based on the detection results of the front wheel speed acquiring unit 75 and the steering angle acquiring unit 77. At this time, it determines with reference to a ratio map 84a (table) stored beforehand in the storage medium. The ratio map 84a is information matching wheel speed SF, steering angle, and ratio.

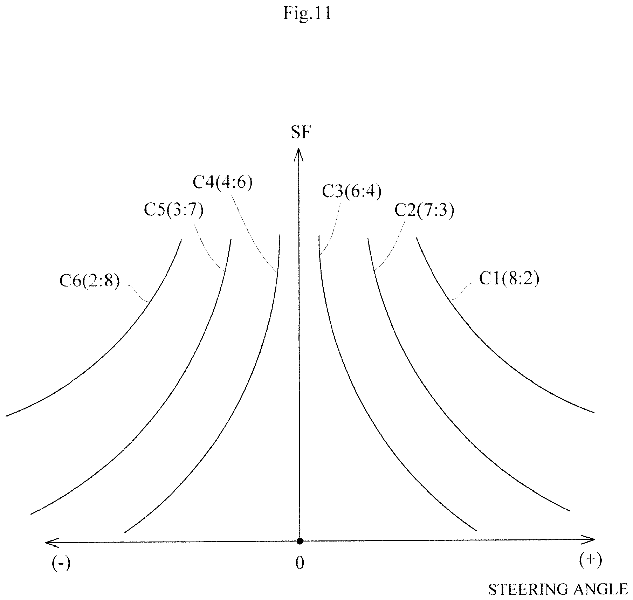

Fig. 11 is a view showing an example of ratio map 84a. As shown, the horizontal axis is the steering angle, and the vertical axis is the wheel speed SF of the front wheel 17. The steering angle of the handlebar 13 is "0" when the handlebar 13 is in neutral position (position of the handlebar 13 at the time of straight traveling). Positive values represent the handlebar 13 being turned rightward, and negative values leftward.

Each of the plurality of curves (C1, C2, C3, ..., C6) appearing on this ratio map 84a links points of the same ratio between the target values IR and IL. For example, on the line of curve C1, the ratio is "IR:IL = 8:2", and on the line of curve C2 the ratio is "IR:IL = 7:3". A method of expressing the ratios is selected as appropriate.

According to such ratio map 84a, a ratio between target values IR and IL can be determined uniquely by giving a wheel speed SF and a steering angle of the handlebar 13.

According to the above steering angle of the handlebar 13, a leaning direction of the vehicle body can be determined reliably, which enables an accurate determination as to which of the right and left rear wheels 35R and 35L acts as the drive wheel in the leaning direction. The wheel speed SF of the front wheel 17 and the steering angle of the handlebar 13 have a definite relevance to the lean angle of the vehicle body. For example, when the steering angle of the handlebar 13 is the same, the lean angle of the vehicle body becomes small as the wheel speed SF becomes large. Therefore, based on the wheel speed SF and the steering angle of the handlebar 13, the leaning direction and lean angle of the vehicle body can be guessed roughly, and further the wheel speeds SR and SL can also be guessed. Based on such findings, the above curves C1, C2, C3, ..., C6 are matched with the wheel speed SF and the steering angle of the handlebar 13 through experiment or simulation. Therefore, the ratio determining unit 84 can determine appropriate ratios based on the wheel speed SF and the steering angle of the handlebar 13.

3. Motor control operation

Next, an example of operation of the electric vehicle 1 according to Embodiment 2 will be described. Here description will be made centering particularly on operation to carry out drive control of the respective electric motors 33R and 33L. The order of the steps is the same as in Fig. 9 referred to in Embodiment 1, and so description will be made with reference to Fig. 9.

<Step S1> Read detection result of each acquiring unit

The controller 81 reads the detection result of each of the accelerator control amount acquiring unit 71, front wheel speed acquiring unit 75 and steering angle acquiring unit 77 at regular time intervals.

<Step S2> Obtain total value IA

The motor current determining unit 85 obtains total value IA of the motor currents corresponding to the accelerator control amount with reference to the table stored in the storage medium.

<Step S3> Determine ratio between target values IR and IL

The ratio determining unit 84 refers to the ratio map 84a, and determines a ratio between the target values IR and IL based on the detection result of each of the front wheel speed acquiring unit 75 and steering angle acquiring unit 77

<Step S4> Determine target values IR and IL

The motor current determining unit 85 determines the target values IR and IL based on the total value IA and the ratio determined by the ratio determining unit 84.

<Step S5> Determine upper limit Dm

The maximum voltage determining unit 87 determines upper limit Dm of the duty ratio based on the wheel speed SF, with reference to the table stored in the storage medium.

<Step S6> Drive electric motors 33

The drive circuits 89R and 89L adjust the motor currents IMR and IML to the target values IR and IL, respectively, by varying the duty ratio in the range not exceeding the upper limit Dm.

As described above, with the electric vehicle 1 according to Embodiment 2, the ratio determining unit 84 can determine a proper ratio based on the wheel speed SF and the steering angle of the handlebar 13. Therefore, the position of the vehicle body can be stabilized conveniently as in Embodiment 1.

A leaning direction of the vehicle body can be determined accurately based on the steering angle of the handlebar 13 even when the vehicle speed of the electric vehicle 1 is extremely low. Therefore, which of the rear wheels 35R and 35L acts as the "drive wheel in the leaning direction of the vehicle body" can be determined accurately, and one of the rear wheels 35 acting as the drive wheel in the leaning direction of the vehicle body can be made to generate a relatively large drive torque.

When starting the electric vehicle 1, for example, the vehicle speed is almost zero but the vehicle body may be leaning. In such a case, this Embodiment 2 can cause one of the rear wheels 35 acting as the drive wheel in the leaning direction of the vehicle body to generate a relatively large drive torque properly. This one rear wheel 35 transmits a larger driving force to the traveling surface G than the other rear wheel 35. The one rear wheel 35 can transmit a relatively large driving force effectively to the traveling surface G. The acceleration of the one rear wheel 35 becomes larger than the acceleration of the other rear wheel 35. In other words, the one rear wheel 35 tends to move ahead of the other rear wheel 35. As a result, a force occurs in the direction to raise the vehicle body, rendering the vehicle body easy to rise and difficult to fall in the leaning direction. Therefore, the electric vehicle 1 can be started very smoothly.

Some other modifications can be thought out as follows, not all of them falling within the the scope of protection of independent claim 1:

(1) Embodiments 1 and 2 described above include the ratio determining units 83 and 84 for determining ratios between target values IR and IL, but this is not limitative. An appropriate variation can be made as long as the motor current IM to be fed to the electric motor 33 corresponding to the rear wheel 35 in the leaning direction of the vehicle body can be made larger than the motor current IM to be fed to the other electric motor 33.

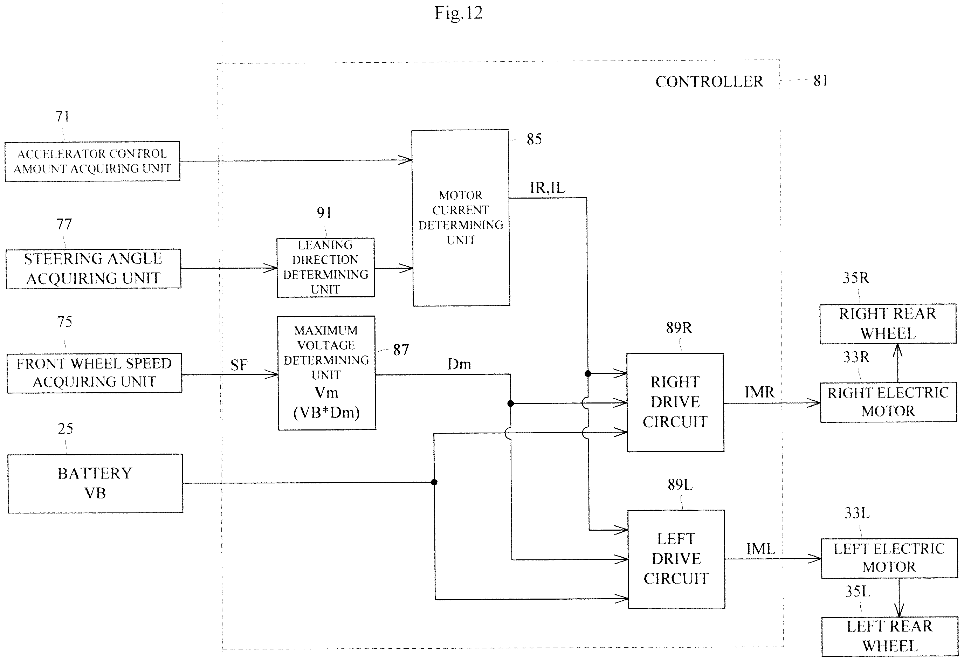

Reference is made to Fig. 12, for example. Fig. 12 is a block diagram showing an outline construction of a control system of an electric vehicle according to a modified embodiment. As shown, the controller 81 includes a leaning direction determining unit 91. The detection result of the steering angle acquiring unit 77 is inputted to the leaning direction determining unit 91. The leaning direction determining unit 91 determines a leaning direction of the vehicle body based on the detection result of the steering angle acquiring unit 77, and determines which of the pair of rear wheels 35R and 35L acts as the "drive wheel in the leaning direction of the vehicle body". Based on the result of this determination, the motor current determining unit 85 determines the target value of the motor current applied to the electric motor 33 corresponding to one of the rear wheels 35 determined to be the "drive wheel in the leaning direction of the vehicle body" to have a larger value than the target value of the motor current applied to the other electric motor 33. Such construction can also stabilize the position of the vehicle body conveniently.

(2) In Embodiment 2 described above, the ratio determining unit 84 determines the ratio between target values IR and IL based on the detection results of the front wheel speed acquiring unit 75 and steering angle acquiring unit 77, but this is not limitative. For example, rocking angle acquiring units 95 (see Fig. 2) may be provided for detecting rocking angles of the respective rear arms 31R and 31L, and the ratio determining unit may be modified to determine the ratio between target values IR and IL based on detection results of these rocking angle acquiring units 95. Since the right rocking angle and left rocking angle have a definite relevance to the leaning direction and lean angle of the vehicle body, the ratio determining unit according to the modified embodiment can properly determine the ratio between target values IR and IL.

(3) Embodiments 1 and 2 described above include the ratio determining units 83 and 84 for determining ratios between target values IR and IL, but this is not limitative. An appropriate variation can be made as long as the motor current IM to be fed to the electric motor 33 corresponding to the rear wheel 35 having a relatively slow wheel speed can be made larger than the motor current IM to be fed to the other electric motor 33.

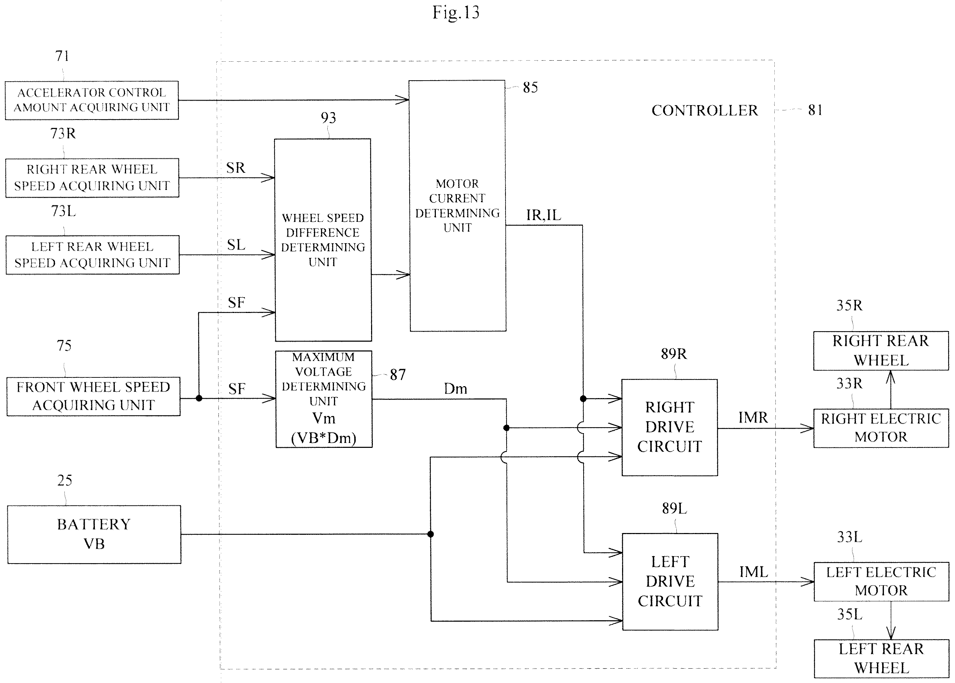

Reference is made to Fig. 13. Fig. 13 is a block diagram showing an outline construction of a control system of an electric vehicle according to a modified embodiment. As shown, the controller 81 includes a wheel speed difference determining unit 93. The detection results of the right rear wheel speed acquiring unit 73R, left rear wheel speed acquiring unit 73L and front wheel speed acquiring unit 75 are inputted to the wheel speed difference determining unit 93. Based on these detection results, the wheel speed difference determining unit 93 determines whether or not any one of the wheel speeds SR and SL is slower by at least a fixed value than the wheel speed SF of the front wheel 17. When the wheel speed difference determining unit 93 determines that one of the wheel speeds SR and SL is slower by at least the fixed value, the motor current determining unit 85 determines the target value of the motor current corresponding to the one rear wheel 35 determined to be slow to have a larger value than the target value of the motor current corresponding to the other rear wheel 35. Such construction can also stabilize the position of the vehicle body conveniently.

In the above modification, an average wheel speed SA of the wheel speeds SR and SL may be used instead of the wheel speed SF of the front wheel 17. In this case, the wheel speed difference determining unit 93 calculates the average wheel speed SA based on detection results of the acquiring units 73R and 73L, and determines whether or not one of the wheel speeds SR and SL is slower by at least a fixed value than the this average wheel speed SA. Such construction can also stabilize the position of the vehicle body conveniently.

(4) In Embodiment 1 described above, the ratio determining unit 83 determines the ratio using a relational expression, but this is not limitative. For example, a change may be made to determine the ratio using a table stored beforehand in the storage medium. In Embodiment 2 described above, the ratio determining unit 84 determines the ratio using the ratio map 84a. A change may be made to determine the ratio using a relational expression. Similarly, the processing technique can be change as appropriate also in connection with the motor current determining unit 85 and maximum voltage determining unit 87, for example.

(5) In each of Embodiments 1 and 2 described above, the support mechanism 65 includes the seesaw member 43 which moves the right rear wheel 35R and left rear wheel 35L up and down in opposite directions to each other, but this is not limitative. That is, a change may be made to omit the seesaw member 43 and the right rear arm 31R and the left rear arm 31L may be arranged rockable independently of each other.

(6) The foregoing embodiments illustrate, by way of example, a three-wheeled vehicle having a single front wheel 17 and a pair of rear wheels 35R and 35L, but this is not limitative. A change may be made to a four-wheeled vehicle having a pair of front wheels and a pair of rear wheels. In this case, the pair of front wheels correspond to the non-drive wheel in this invention.

(7) In Embodiments 1 and 2 described above, the pair of rear wheels 35R and 35L are drive wheels and the front wheel 17 a non-drive wheel, but this is not limitative. For example, the front wheel may be changed to a drive wheel, and the rear wheels to non-drive wheels. In this case, the front wheel acting as a drive wheel consists of a pair of wheels. The rear wheels acting as non-drive wheels may consist of a single wheel, or may consist of a pair of wheels.

(8) Each or the embodiments described above and each of the modified embodiments described in paragraphs (1) to (7) above may be further changed as appropriate by replacing or combining the components thereof with the components of the other modified embodiments.

Reference Signs List

1 ... electric vehicle
3 ... body frame
5 ... head tube
13 ... handlebar
14 ... accelerator grip

17 ... front wheel (non-drive wheel)

25 ... battery

31R ... right rear arm

31L ... left rear arm

33, 33R, 33L ... electric motors (motors)

35R ... right rear wheel (drive wheel)

35L ... left rear wheel (drive wheel)

41 ... lever

43 ... seesaw member

45R, 45L ... rods

51 ... bracket

53 ... rod

61 ... buffer

65 ... support mechanism

71 ... accelerator control amount acquiring unit

73R ... right rear wheel speed acquiring unit (drive wheel speed acquiring unit)

73L ... left rear wheel speed acquiring unit (drive wheel speed acquiring unit)

75 ... front wheel speed acquiring unit (non-drive wheel speed acquiring unit)

77 ... steering angle acquiring unit

81 ... controller

91 ... leaning direction determining unit

93 ... wheel speed difference determining unit

95 ... rocking angle acquiring units

IA ... total value

IR, IL ... target values

IM, IMR, IML ... motor currents

Vm ... maximum voltage

Dm ... upper limit

SF, SR, SL ... wheel speeds

SA ... average wheel speed

A1 ... rocking central axis

B ... axis of rotation

## Claims

1. An electric vehicle (1) capable of making a turn while leaning a vehicle body (3), comprising:

   a non-drive wheel (17) rotatable with steering operation;
   a pair of right and left drive wheels (35R, 35L) provided separately from the non-drive wheel (17);
   a support mechanism (65) configured to support the pair of drive wheels (35R, 35L) such that they are vertically movable;
   a pair of motors (33R, 33L) corresponding to the pair of drive wheels (35R, 35L), respectively;
   a pair of drive wheel speed acquiring units (73R, 73L) configured to acquire wheel speeds of the drive wheels (35R, 35L); and
   a controller (81) configured to vary a difference between motor currents led to the pair of motors (33R, 33L), respectively;
   wherein the controller (81) is configured to make the motor current led to one of the motors (33R, 33L) corresponding to a drive wheel (35R, 35L) having the slower wheel speed of the pair of drive wheels (35R, 35L) larger than the motor current led to the other motor based on results of the drive wheel speed acquiring units (73R, 73L).

2. The electric vehicle (1) according to claim 1, wherein the controller (81) is configured to make the motor current led to one of the motors (33R, 33L) corresponding to a drive wheel (35R, 35L) in a leaning direction of the vehicle body (3) larger than the motor current led to the other motor (33R, 33L).

3. The electric vehicle (1) according to claim 2, comprising a direction acquiring unit (77) configured to acquire information relating to the leaning direction of the vehicle body (3); wherein the controller (81) is configured to determine the leaning direction of the vehicle body (3) based on a result of the direction acquiring unit (77).

4. The electric vehicle (1) according to claim 3, wherein:

the direction acquiring unit (77) includes a steering angle acquiring unit (77) configured to acquire a steering angle of a handlebar (13) connected to the non-drive wheel (17); and
the controller (81) is configured to determine the leaning direction of the vehicle body (3) based on a result of the steering angle acquiring unit (77).

5. The electric vehicle (1) according to claim 4, comprising a non-drive wheel speed acquiring unit (75) configured to acquire a wheel speed of the non-drive wheel (17); wherein the controller (81) is configured to obtain a ratio between the motor currents led to the drive wheels (35R, 35L), respectively, based on results of the steering angle acquiring unit (77) and the non-drive wheel speed acquiring unit (75), and is configured to adjust each motor current based on this ratio.

6. The electric vehicle (1) according to claim 1, comprising a pair of drive wheel speed acquiring units (73R, 73L) configured to acquire wheel speeds of the drive wheels (35R, 35L);
wherein the controller (81) is configured to calculate an average wheel speed of the drive wheels (35R, 35L) based on results of the drive wheel speed acquiring units (73R, 73L), and
when one of the drive wheels (35R, 35L) is slower by at least a fixed value than the average wheel speed, the controller (81) is configured to make the motor current led to one of the motors (33R, 33L) corresponding to the slower drive wheel (35R, 35L) larger than the motor current led to the other motor (33R, 33L).

7. The electric vehicle (1) according to claim 1, comprising:

a pair of drive wheel speed acquiring units (73R, 73L) configured to acquire wheel speeds of the drive wheels (35R, 35L); and
a non-drive wheel speed acquiring unit (75) configured to acquire a wheel speed of the non-drive wheel (17);
wherein the controller (81), when one of the drive wheels (35R, 35L) is slower by at least a fixed value than the wheel speed of the non-drive wheel (17) based on the results of the drive wheel speed acquiring units (73R, 73L) and the non-drive wheel speed acquiring unit (75), is configured to make the motor current led to one of the motors (33R, 33L) corresponding to the slower drive wheel (35R, 35L) larger than the motor current led to the other motor (33R, 33L).

8. The electric vehicle (1) according to any one of claims 1 to 7, comprising a non-drive wheel speed acquiring unit (75) configured to acquire a wheel speed of the non-drive wheel (17);
wherein the controller (81) is configured to set a maximum voltage of voltages applied to the motors (33R, 33L) based on a result of the non-drive wheel speed acquiring unit (75), and is configured to adjust each of the motor currents by varying of the voltages applied within a range up to the maximum voltage.

9. The electric vehicle (1) according to claim 8, wherein the controller (81) is configured to vary the voltages applied by varying a duty ratio of voltage pulses applied to the motors (33R, 33L), and is configured to set an upper limit of the duty ratio based on the result of the non-drive wheel speed acquiring unit (75), the upper limit specifying the maximum voltage of the voltages applied.

10. The electric vehicle (1) according to any one of claims 1 to 9, comprising an acquiring unit (71) configured to acquire an accelerator control amount;
wherein the controller (81) is configured to obtain a total value of the motor currents based on the accelerator control amount acquiring unit, and is configured to adjust a sum of the motor currents led to the motors (33R, 33L) to the total value.

**Patentansprüche**

1. Elektrofahrzeug (1), das in der Lage ist, mit Neigen einer Fahrzeugkarosserie (3) eine Kurve zu fahren, wobei es umfasst:

ein nicht antreibendes Rad (17), das bei Lenkbetätigung gedreht werden kann;

ein Paar aus einem rechten und einem linken Antriebsrad (35R, 35L), die getrennt von dem nicht angetriebenen Rad (17) vorhanden sind;

einen Trägermechanismus (65), der so eingerichtet ist, dass er die paarigen Antriebsräder (35R, 35L) so trägt, dass sie vertikal bewegt werden können;

paarige Motoren (33R, 33L), die jeweils den paarigen Antriebsrädern (35R, 35L) entsprechen;

paarige Einheiten (73R, 73L) zum Erfassen von Antriebsrad-Geschwindigkeiten, die so eingerichtet sind, dass sie Radgeschwindigkeiten der Antriebsräder (35R, 35L) erfassen; und

eine Steuerungseinrichtung (81), die so eingerichtet ist, dass sie eine Differenz zwischen Motor-Strömen variiert, die jeweils zu den paarigen Motoren (33R, 33L) geleitet werden;

wobei die Steuerungseinrichtung (81) so eingerichtet ist, dass sie den Motor-Strom, der zu einem der Motoren (33R, 33L) geleitet wird, der einem Antriebsrad (35R, 35L) mit der niedrigeren Radgeschwindigkeit des Paars von Antriebsrädern (35R, 35L) entspricht, auf Basis von den Ergebnissen der Einheiten (73R, 73L) zum Erfassen von Antriebsrad-Geschwindigkeiten gegenüber dem zu dem anderen Motor geleiteten Motor-Strom verstärkt.

2. Elektrofahrzeug (1) nach Anspruch 1, wobei die Steuerungseinrichtung (81) so eingerichtet ist, dass sie den Motor-Strom, der zu einem der Motoren (33R, 33L) geleitet wird, der einem Antriebsrad (35R, 35L) in einer Neigungsrichtung der Fahrzeugkarosserie (3) entspricht, gegenüber dem zu dem anderen Motor (33R, 33L) geleiteten Motor-Strom verstärkt.

3. Elektrofahrzeug (1) nach Anspruch 2, das eine Einheit (77) zum Erfassen einer Richtung umfasst, die zum Erfassen von Informationen bezüglich der Neigungsrichtung der Fahrzeugkarosserie (3) eingerichtet ist;

wobei die Steuerungseinrichtung (81) so eingerichtet ist, dass sie die Neigungsrichtung der Fahrzeugkarosserie (3) auf Basis eines Ergebnisses der Einheit (77) zum Erfassen einer Richtung bestimmt.

4. Elektrofahrzeug (1) nach Anspruch 3, wobei:

die Einheit (77) zum Erfassen einer Richtung eine Einheit (77) zum Erfassen eines Lenkwinkels umfasst, die so eingerichtet ist, dass sie einen Lenkwinkel einer Lenkstange (13) erfasst, die mit dem nicht antreibenden Rad (17) verbunden ist; und

die Steuerungseinrichtung (81) so eingerichtet ist, dass sie die Neigungsrichtung der Fahrzeugkarosserie (3) auf Basis eines Ergebnisses der Einheit (77) zum Erfassen eines Lenkwinkels bestimmt.

5. Elektrofahrzeug (1) nach Anspruch 4, das eine Einheit (75) zum Erfassen einer Geschwindigkeit des nicht antreibenden Rades umfasst, die so eingerichtet ist, dass sie eine Radgeschwindigkeit des nicht antreibenden Rades (17) erfasst;

wobei die Steuerungseinrichtung (81) so eingerichtet ist, dass sie ein Verhältnis zwischen den Motor-Strömen, die jeweils zu den Antriebsrädern (35R, 35L) geleitet werden, auf Basis von Ergebnissen der Einheit (77) zum Erfassen eines Lenkwinkels und der Einheit (75) zum Erfassen einer Geschwindigkeit des nicht angetriebenen Rades ermittelt, und so eingerichtet ist, dass sie jeden Motor-Strom auf Basis dieses Verhältnisses anpasst.

6. Elektrofahrzeug (1) nach Anspruch 1, das ein Paar von Einheiten (73R, 73L) zum Erfassen von Geschwindigkeiten der Antriebsräder umfasst, die so eingerichtet sind, dass sie Radgeschwindigkeiten der Antriebsräder (35R, 35L) erfassen;

wobei die Steuerungseinrichtung (81) so eingerichtet ist, dass sie eine durchschnittliche Radgeschwindigkeit der Antriebsräder (35R, 35L) auf Basis von Ergebnissen der Einheiten (73R, 73L) zum Erfassen von Geschwindigkeiten der Antriebsräder berechnet, und die Steuerungseinrichtung (81) so eingerichtet ist, dass sie, wenn eines der Antriebsräder (35R, 35L) um wenigstens einen festen Wert langsamer ist als die durchschnittliche Radgeschwindigkeit, den Motor-Strom, der zu einem der Motoren (33R, 33L) geleitet wird, der dem langsameren Antriebsrad (35R, 35L) entspricht, gegenüber dem zu dem anderen Motor (33R, 33L) geleiteten Motor-Strom verstärkt.

7. Elektrofahrzeug (1) nach Anspruch 1, das umfasst:

paarige Einheiten (73R, 73L) zum Erfassen von Antriebsrad-Geschwindigkeiten, die so eingerichtet sind, dass sie Radgeschwindigkeiten der Antriebsräder (35R, 35L) erfassen; und

eine Einheit (75) zum Erfassen einer Geschwindigkeit des nicht antreibenden Rades, die so eingerichtet ist, dass sie eine Radgeschwindigkeit des nicht antreibenden Rades (17) erfasst;

wobei die Steuerungseinrichtung (81) so eingerichtet ist, dass sie, wenn den Ergebnissen der Einheiten (73R, 73L) zum Erfassen von Geschwindigkeiten der Antriebsräder und der Einheit (75) zum Erfassen einer Geschwindigkeit des nicht antreibenden Rades zufolge eines der Antriebsräder (35R, 35L) um wenigstens einen festen Wert langsamer ist als die Radgeschwindigkeit des nicht antreibenden Rades (17), den Motor-Strom, der zu einem der Motoren (33R, 33L) geleitet wird, der dem langsameren Antriebsrad (35R, 35L) entspricht, gegenüber dem zu dem anderen Motor (33R, 33L) geleiteten Motor-Strom verstärkt.

**8.** Elektrofahrzeug (1) nach einem der Ansprüche 1 bis 7, das eine Einheit (75) zum Erfassen einer Geschwindigkeit des nicht angetriebenen Rades umfasst, die so eingerichtet ist, dass sie eine Radgeschwindigkeit des nicht antreibenden Rades (17) erfasst;
wobei die Steuerungseinrichtung (81) so eingerichtet ist, dass sie eine maximale Spannung an die Motoren (33R, 33L) angelegter Spannungen auf Basis eines Ergebnisses der Einheit (75) zum Erfassen einer Geschwindigkeit des nicht angetriebenen Rades einstellt, und so eingerichtet ist, dass sie jeden der Motor-Ströme anpasst, indem sie die angelegten Spannungen innerhalb eines Bereiches bis zu der maximalen Spannung variiert.

**9.** Elektrofahrzeug (1) nach Anspruch 8, wobei die Steuerungseinrichtung (81) so eingerichtet ist, dass sie die angelegten Spannungen variiert, indem sie ein Tastverhältnis an die Motoren (33R, 33L) angelegter Spannungsimpulse variiert, und so eingerichtet ist, dass sie eine Obergrenze des Tastverhältnisses auf Basis des Ergebnisses der Einheit (75) zum Erfassen einer Geschwindigkeit des nicht angetriebenen Rades einstellt, wobei die Obergrenze die maximale Spannung der angelegten Spannungen angibt.

**10.** Elektrofahrzeug (1) nach einem der Ansprüche 1 bis 9, das eine Erfassungs-Einheit (71) umfasst, die so eingerichtet ist, dass sie ein Maß von Gasgriff-Betätigung erfasst;
wobei die Steuerungseinrichtung (81) so eingerichtet ist, dass sie einen Gesamtwert der Motor-Ströme auf Basis der Einheit zum Erfassen eines Maßes von Gasgriff-Betätigung ermittelt, und so eingerichtet ist, dass sie eine Summe der zu den Motoren (33R, 33L) geleiteten Motor-Ströme an den Gesamtwert anpasst.

## Revendications

**1.** Véhicule électrique (1) capable de réaliser un virage alors qu'un corps de véhicule (3) est incliné, comprenant :

une roue non motrice (17) rotative à fonction directrice ;
une paire de roues motrices droite et gauche (35R, 35L) pourvues séparément de la roue non motrice (17) ;
un mécanisme de support (65) configuré pour supporter la paire de roues motrices (35R, 35L) de manière à ce qu'elles puissent se déplacer verticalement ;
une paire de moteurs (33R, 33L) correspondant à la paire de roues motrices (35R, 35L), respectivement ;
une paire d'unités d'acquisition de vitesse de roue motrice (73R, 73L) configurée pour acquérir des vitesses de roue des roues motrices (35R, 35L) ; et
un contrôleur (81) configuré pour faire varier la différence entre des courants moteur envoyés à la paire de moteurs (33R, 33L), respectivement ;
dans lequel le contrôleur (81) est configuré pour rendre le courant moteur envoyé au moteur desdits moteurs (33R, 33L) correspondant à la roue motrice (35R, 35L) présentant la vitesse de roue la plus basse de la paire de roues motrices (35R, 35L) plus grand que le courant moteur envoyé à l'autre moteur sur base de résultats des unités d'acquisition de vitesse de roue motrice (73R, 73L).

**2.** Véhicule électrique (1) selon la revendication 1, dans lequel le contrôleur (81) est configuré pour rendre le courant moteur envoyé à l'un des moteurs (33R, 33L) correspondant à la roue motrice (35R, 35L) en direction d'inclinaison du corps de véhicule (3) plus grand que le courant moteur envoyé à l'autre moteur (33R, 33L).

**3.** Véhicule électrique (1) selon la revendication 2, comprenant une unité d'acquisition de direction (77) configurée pour acquérir de l'information relative à la direction d'inclinaison du corps de véhicule (3) ;
dans lequel le contrôleur (81) est configuré pour déterminer la direction d'inclinaison du corps de véhicule (3) sur base d'un résultat de l'unité d'acquisition de direction (77).

**4.** Véhicule électrique (1) selon la revendication 3, dans lequel :

l'unité d'acquisition de direction (77) comprend une unité d'acquisition d'angle de direction (77) configurée pour acquérir un angle de direction d'un guidon (13) connecté à la roue non motrice (17) ; et
le contrôleur (81) est configuré pour déterminer la direction d'inclinaison du corps de véhicule (3) sur base d'un résultat de l'unité d'acquisition d'angle de direction (77) .

5. Véhicule électrique (1) selon la revendication 4, comprenant une unité d'acquisition de vitesse de roue non motrice (75) configurée pour acquérir une vitesse de roue de la roue non motrice (17) ;
dans lequel le contrôleur (81) est configuré pour obtenir un ratio entre les courants moteur envoyés aux roues motrices (35R, 35L), respectivement, sur base de résultats de l'unité d'acquisition d'angle de direction (77) et de l'unité d'acquisition de vitesse de roue non motrice (75), et est configuré pour ajuster chaque courant moteur sur base de ce ratio.

6. Véhicule électrique (1) selon la revendication 1, comprenant une paire d'unités d'acquisition de vitesse de roue motrice (73R, 73L) configurée pour acquérir des vitesses de roue des roues motrices (35R, 35L) ;
dans lequel le contrôleur (81) est configuré pour calculer une vitesse de roue moyenne des roues motrices (35R, 35L) sur base de résultats des unités d'acquisition de vitesse de roue motrice (73R, 73L), et
quand l'une des roues motrices (35R, 35L) est plus lente d'au moins une valeur fixe à la vitesse de roue moyenne, le contrôleur (81) est configuré pour rendre le courant moteur envoyé à l'un des moteurs (33R, 33L) correspondant à la roue motrice (35R, 35L) la plus lente plus grand que le courant moteur envoyé à l'autre moteur (33R, 33L).

7. Véhicule électrique (1) selon la revendication 1, comprenant :

une paire d'unités d'acquisition de vitesse de roue motrice (73R, 73L) configurée pour acquérir des vitesses de roue des roues motrices (35R, 35L) ; et
une unité d'acquisition de vitesse de roue non motrice (75) configurée pour acquérir une vitesse de roue de la roue non motrice (17) ;
dans lequel le contrôleur (81), quand l'une des roues motrices (35R, 35L) est plus lente d'au moins une valeur fixe à la vitesse de roue de la roue non motrice (17) sur base des résultats des unités d'acquisition de vitesse de roue motrice (73R, 73L) et de l'unité d'acquisition de vitesse de roue non motrice (75), est configuré pour rendre le courant moteur envoyé à l'un des moteurs (33R, 33L) correspondant à la roue motrice (35R, 35L) la plus lente plus grand que le courant moteur envoyé à l'autre moteur (33R, 33L).

8. Véhicule électrique (1) selon l'une quelconque des revendications 1 à 7, comprenant une unité d'acquisition de vitesse de roue non motrice (75) configurée pour acquérir une vitesse de roue de la roue non motrice (17) ;
dans lequel le contrôleur (81) est configuré pour régler une ou des tensions maximales appliquées aux moteurs (33R, 33L) sur base d'un résultat de l'unité d'acquisition de vitesse de roue non motrice (75), et est configuré pour ajuster chacun des courants moteur en faisant varier les tensions appliquées dans une plage allant jusqu'à la tension maximale.

9. Véhicule électrique (1) selon la revendication 8, dans lequel le contrôleur (81) est configuré pour faire varier les tensions appliquées en faisant varier le rapport cyclique de pulsations de tension appliquées aux moteurs (33R, 33L), et est configuré pour régler une limite supérieure du rapport cyclique sur base du résultat de l'unité d'acquisition de vitesse de roue non motrice (75), la limite supérieure spécifiant la tension maximale parmi les tensions appliquées.

10. Véhicule électrique (1) selon l'une quelconque des revendications 1 à 9, comprenant une unité d'acquisition (71) configurée pour acquérir une grandeur de commande d'accélérateur ;
dans lequel le contrôleur (81) est configuré pour obtenir une valeur totale des courants moteur sur base de l'unité d'acquisition de grandeur de commande d'accélérateur, et est configuré pour ajuster la somme des courants moteur envoyés aux moteurs (33R, 33L) à la valeur totale.

Fig.1

Fig.2

Fig.3

Fig.4

Fig.5

EP 2 765 024 B1

Fig.6

EP 2 765 024 B1

Fig.7

## Fig.8

EP 2 765 024 B1

Fig.9

START

S1　READ DETECTION RESULT
OF EACH ACQUIRING UNIT

S2　OBTAIN TOTAL VALUE IA

S3　DETERMINE RATIO BETWEEN
TARGET VALUES IR AND IL

S4　DETERMINE TARGET
VALUES IR AND IL

S5　DETERMINE UPPER LIMIT Dm

S6　DRIVE ELECTRIC MOTORS 33

RETURN

Fig.10

EP 2 765 024 B1

Fig.11

Fig.12

CONTROLLER — 81

71
ACCELERATOR CONTROL
AMOUNT ACQUIRING UNIT

85
MOTOR
CURRENT
DETERMINING
UNIT

IR,IL

77
STEERING ANGLE
ACQUIRING UNIT

91
LEANING
DIRECTION
DETERMINING
UNIT

75
FRONT WHEEL SPEED
ACQUIRING UNIT

SF

MAXIMUM
VOLTAGE
DETERMINING
UNIT
Vm
(VB*Dm)

87

Dm

89R
RIGHT
DRIVE
CIRCUIT

IMR

35R
RIGHT REAR
WHEEL

33R
RIGHT ELECTRIC
MOTOR

25
BATTERY
VB

89L
LEFT
DRIVE
CIRCUIT

IML

33L
LEFT ELECTRIC
MOTOR

35L
LEFT REAR
WHEEL

EP 2 765 024 B1

31

Fig.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201146273 A
- WO 2010113439 A

- EP 1875888 A2